(19) Europäisches Patentamt / European Patent Office / Office européen des brevets

(11) **EP 4 686 844 A1**

(12) **EUROPEAN PATENT APPLICATION**

(43) Date of publication:
**04.02.2026  Bulletin 2026/06**

(21) Application number: **25190230.0**

(22) Date of filing: **17.07.2025**

(51) International Patent Classification (IPC):
**F16C 19/38** (2006.01)    **F16C 23/08** (2006.01)
**F16C 33/46** (2006.01)    **F16C 33/54** (2006.01)

(52) Cooperative Patent Classification (CPC):
**F16C 19/38; F16C 23/086; F16C 33/4676;**
**F16C 33/542; F16C 33/545;** F16C 2300/14;
F16C 2360/31

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.07.2024  DE 102024207176**

(71) Applicant: **Aktiebolaget SKF**
**415 50 Göteborg (SE)**

(72) Inventors:
• **Weigand, Stefan Manfred**
**97517 Rannungen (DE)**
• **Hofmann, Sabine**
**97273 Kürnach (DE)**
• **Reichert, Juergen**
**97499 Donnersdorf (DE)**
• **Fritz, Dominik**
**97074 Würzburg (DE)**
• **Jolkin, Alexei**
**41574 Göteborg (SE)**
• **Ramachandran, Sankar**
**43145 Mölndal (SE)**

(74) Representative: **Kuhstrebe, Jochen**
**SKF GmbH**
**Gunnar-Wester-Straße 12**
**97421 Schweinfurt (DE)**

(54) **SPHERICAL ROLLER BEARING**

(57)    Spherical roller bearing (1), in particular for supporting a wind turbine main shaft, comprising at least an outer ring (4), and an inner ring (6), wherein the inner ring (6) has a diameter of at least 499 mm, two set of spherical rollers (8) which are rolling along raceways formed on the outer and inner ring (4, 6), and at least one cage (2) configured to retain the spherical rollers (8), wherein the at least one cage (2) comprises at least one axial inner cage ring (10) extending in a circumferential direction of the spherical roller bearing (1), a first axial outer cage ring (12-1) spaced from the at least one axial inner cage ring (10) on a first axial side and connected to it with a plurality of cage bars (14) thereby forming closed pockets (16), wherein each pocket (16) is configured to receive one spherical roller (8) of the first set of spherical rollers, and a second axial outer cage ring (12-2) spaced from the at least one axial inner cage ring (10) on a second axial side opposite of the first axial side and connected to it with a plurality of cage bars (14) thereby forming closed pockets (16), wherein each pocket (16) is configured to receive one spherical roller (8) of the second set of spherical rollers (8), wherein at least one cage bar (14) has a radial curvature (30) for curving the cage bar (14) in the radial direction along the axial direction, wherein the radial curvature (30) is concave with respect to a pitch diameter, and in that the at least one cage and/or the spherical rollers is/are free of any means for holding the spherical rollers in the at least one cage.

Fig. 3

## Description

Technical field of the invention

The present invention relates to a spherical roller bearing. Furthermore, the present invention relates to a bearing arrangement comprising a spherical roller bearing.

Background of the invention

Rolling bearings are common mechanical components for many different applications. There are different types of rolling bearings that are designed to meet different requirements. Depending on the conditions of the particular application, i.e., the load level, the rotational speed, the temperature, etc., there are different types of suitable rolling bearings.

A common type of bearing is a spherical roller bearing. The bearing is designed to accommodate large radial loads and axial loads, and it is also designed to accommodate flexing of a shaft supported by the bearings, i.e., the bearing rings can be relatively misaligned. Therefore, such bearings are particularly suitable for more demanding industrial applications such as machines in wind turbines and the like.

In most demanding industrial applications for spherical roller bearings, the most bearing failures are usually related to increased wear. One reason that increased wear occurs may be caused by a displacement of the spherical rollers in a cage retaining the spherical rollers during the operation of the spherical roller bearing. For example, the cage bars may be displaced with respect to the spherical rollers in a radial direction due to a cage clearance and gravity and/or cage deformations under load. This radial displacement may run a higher risk of a so-called edge runner, wherein the spherical roller may scrape against an edge of the cage retaining the roller. A contact between an edge of the cage and a running surface of the spherical roller may reduce or even damage a lubricant film on the spherical roller which may then lead to an increased wear on the spherical roller and/or cage and consequently to a decreased service life of the spherical roller bearing.

It is therefore object of the present invention to provide a spherical roller bearing having an improved service life.

Summary of the invention

This object is solved by a spherical roller bearing according to claim 1.

In the following, a spherical roller bearing is provided. The spherical roller bearing may be used for supporting a wind turbine main shaft.

The spherical roller bearing comprises at least an outer ring, and an inner ring, two set of spherical rollers which are rolling along raceways formed on the outer and inner ring, and at least one cage configured to retain the rollers. The inner ring has a bore with a diameter of at least 499mm, preferably at least 699mm, and even more preferred at least 899mm. The bore may be adapted to receive a component of another machine, for example a shaft of a wind turbine.

In particular, the spherical roller may have a roller length that is equal to or even larger than 1.2 times a roller diameter.

The inner ring may be formed with or without flanges on an axial inner side and/or an axial outer side. If the inner ring is equipped with flanges, flanges may be used as guide flanges for the roller elements. Furthermore, they may also serve as retaining flanges for preventing the rollers from falling out of the bearings.

The at least one cage comprises at least one axial inner cage ring extending in a circumferential direction of the bearing, a first axial outer cage ring spaced from the at least one axial inner cage ring on a first axial side and connected to it with a plurality of cage bars thereby forming closed pockets, wherein each pocket is configured to receive one spherical roller of the first set of rollers, and a second axial outer cage ring spaced from the at least one axial inner cage ring on a second axial side opposite of the first axial side and connected to it with a plurality of cage bars thereby forming closed pockets, wherein each pocket is configured to receive one spherical roller of the second set of rollers.

To improve a service life of the spherical roller bearing, each cage bar has a radial curvature for curving the cage bar in the radial direction along the axial direction, wherein the radial curvature may be concave with respect to a pitch diameter.

The term "pitch diameter" may describe the diameter on which the center points of the spherical rollers will run during operation.

By providing at least one cage bar with the radial curvature may have the advantage that it may be avoided that the spherical roller scrapes along an edge of the at least one cage bar if a contact point between spherical roller and cage bar moves in the radial direction due to the spherical profiling of the roller. In particular, spherical rollers may have a spherical raceway, wherein the roller diameter is maximal in the roller center and decreases along the roller axis. The radial curvature of the cage bars may ensure that the spherical roller contact point may have always the same distance to the edges of the cage bars.

More specifically, in a case in which the cage has straight cage bars, a contact point between the roller and the cage bar would change in respect to the axial position. This may be due to the fact that the spherical roller has an axial clearance in the cage pocket. Because of this the contact point between the cage bar and the roller may not always be at a maximal diameter of the spherical roller. In particular, an axial movement of the spherical roller may also shift the contact point between cage bar and spherical roller. Because of the crowning of the raceway of the spherical roller the contact point may have a trend to move not linear or in a straight line. In particular, the contact point may tend to come closer to the pitch diameter. Therefore, providing the at least one cage bar with the radial curvature may allow to further adapt the cage bar to a movement of the contact between the roller and the cage bar. This may also allow to ensure the contact point is on a surface of the cage and not on an edge even if an additional radial clearance is added and/or cage deformations occur.

Particularly closer to the ends of the cage bars, the movement of the contact point may sometimes not be completely covered by a straight-shaped cage bar. Thus, providing the at least one cage bar with the radial curvature may have the additional advantage of reducing the risk that the contact point moves closer to a radial edge.

Further, the at least one cage and/or the spherical rollers is/are free of any means for holding the spherical rollers in the at least one cage, particularly in the pocket.

In particular, the at least one cage and/or parts of the cage, such as the first cage ring, the second cage ring, the cage bars, or the like, are free of any means for holding or retaining the spherical rollers such that they cannot be lost. In other words, the at least one cage may comprise neither means for snapping the spherical rollers into the pockets nor dimples formed on the axial end faces of the pockets for engaging with recesses formed on end faces of the spherical rollers. Due to the lack of retaining means, the manufacturing costs for the at least one cage may be reduced. Also, since the at least one cage is free of any means for retaining at least one spherical roller in the cage it may be possible to exchange individual spherical rollers, for example during maintenance.

According to a further embodiment, a circumferential side face of each cage bar may be provided in the axial direction with one contact area.

For example, the circumferential side face of each cage bar may be provided with an osculation between the cage bar and the roller along the axial direction. This osculation may determine a movement of the contact point between the cage bar and the spherical roller during the operation of the spherical roller bearing. The osculation, which is the radius on cage bar divided by a crowning radius of the roller, may be between 100% and 104%. This may lead to a reduction of the contact stresses compared to a straight cage bar.

According to a further embodiment, a circumferential side face of each cage bar may be provided in the axial direction with at least two contact areas configured to contact the roller.

Preferably, the at least two contact areas may be located adjacent to the side faces of the roller. Having at least two contact areas may reduce roller skew. Furthermore, at least two contact areas may have the advantage that stress on the at least one cage may be reduced. In particular, when a point of contact between the roller and the cage bar is as close as possible to the cage rings, a bending moment of the cage bar may be reduced, resulting in reduced stress within the at least one cage.

According to a further embodiment, a radius of the radial curvature is adapted to a crowning radius of the spherical rollers. In particular, the radius of the radial curvature on an outer radial side face of the cage bar may be between 0.7 and 6 times the crowning radius of the spherical rollers, preferably between 1.5 and 4 times the crowning radius of the spherical rollers, and even more preferred between 2 and 3 times the crowning radius of the spherical rollers.

In particular, an optimum ratio may depend on a position of the cage bars in the radial direction relative to a pitch diameter of the spherical roller bearing. The radius of the radial curvature may be smaller if the cage bars are positioned closer to the pitch diameter. The more the cage bars may deviate from the pitch diameter, the larger the radius of the radial curvature may be.

According to a further embodiment, the inner ring is not provided with a flange configured to retain and/or guide the spherical rollers.

Providing the first and second cage with closed pockets for the rollers may have the advantage of stopping an axial movement of the roller. This allows to omit any guiding and/or retaining flanges on the inner ring. Furthermore, the manufacturing time may be reduced since the machining of the flanges is not needed. Also, the stresses in the inner ring may be reduced as no undercut has to be formed in the inner ring to form the retaining flange. Thus, the costs and/or the needed amount of raw material for the inner ring can be reduced.

According to a further embodiment, the spherical roller bearing is not equipped with a guide ring.

A guide ring or mid rip flange is usually used to limit a roller skew in an unloaded zone of the spherical roller bearing such that the rollers enter the loaded zone of the spherical roller bearing with a limited skew. This is particularly necessary in high-speed application. Wind main shaft applications are usually low speed applications with a rotational speed of 15RPM or lower. This allows to omit a guide ring.

According to a further embodiment, at least one pocket is defined by a first cage bar on a first circumferential side and a second cage bar on a second circumferential side opposite to the first circumferential side, wherein each of the first cage bar and the second cage bar has a contact surface for contacting a spherical roller, wherein the contact surfaces of the first and second cage bar are at least partially inclined such that an opening angle is formed, wherein the opening angle is preferably between 55° and 67°.

According to a further embodiment, the cage bars are arranged at a position in a radial direction that is at least partially offset to a pitch diameter. This may allow to increase the basic dynamic load rating of the spherical roller bearing.

For example, the cage bars may be arranged at a distance from the raceway of the inner or outer ring in the radial direction that corresponds to 10 to 40 % of a diameter of a spherical roller, or to 60 to 90% of the diameter of the spherical roller, respectively. In particular, the cage bars may be at least partially arranged on a radially inner side of the pitch diameter.

Arranging the cage bars at a position in a radial direction that is offset to a pitch diameter may allow to decrease a distance between two neighboring rollers such that it may be possible to increase the number of rollers in a set of rollers. In addition, arranging the cage bars at a position in a radial direction that is offset to a pitch diameter may allow to increase a width of the cage bar even with very small nominal roller distances. More particularly, increasing the number of rollers in the set of rollers may have the advantage that the basic dynamic load rating of the spherical roller bearing can be increased without the necessity of adapting the outer ring and/or inner ring of the bearing.

According to a further embodiment, the at least one cage may be made from sheet metal.

Using sheet metal as the base material for the at least one cage may have the advantage of reducing the costs for the at least one cage.

Alternatively, the cage may be made from a casted material or machined from a solid material.

According to a further embodiment, the pockets may be formed by pressing and coining and/or milling.

For example, it may be beneficial to manufacture the at least one cage from a flat sheet metal and form the geometry of the at least one cage by bending and afterwards pressing the pockets or otherwise milling the pockets. The most cost-efficient solution may be to press or stamp the pockets and to manufacture the contact surface afterwards by coining, particularly for quantities larger than four cages.

According to a further embodiment, the axial inner cage ring consists of two separate ring elements.

Two separate cages may allow for one set of rollers to have a different rotational speed than the other row. This may reduce the forces that act on each cage compared to a cage which couple the two set of rollers. Alternatively, the first and second cage may be separate from each other, but also arranged so close to each other that it may be possible for the first and second cage to support each other while still be able to have a relative movement.

Preferably, a gap may be formed between the first and second ring elements of the axial inner cage ring.

A gap between the first and second ring elements of the axial inner cage ring may allow to improve a lubricant flow to the inner ring of the spherical roller bearing.

According to a further embodiment, the axial inner cage ring comprises a first ring element and a second ring element which are fixed to each other.

This may have the advantage that the at least one cage may be formed by two identical cages that are fixed to each other. This may allow for an easier manufacturing process for the at least one cage.

According to a further aspect, a bearing arrangement for a wind turbine main shaft is provided, wherein the bearing arrangement includes at least one spherical roller bearing as described above.

All features described above with respect to the spherical roller bearing apply - separately or in combination - to the spherical roller bearing used in the bearing arrangement.

Further preferred embodiments are defined in the dependent claims as well as in the description and the figures. Thereby, elements described or shown in combination with other elements may be present alone or in combination with other elements without departing from the scope of protection.

Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:

Fig. 1: shows a schematic cross section of a spherical roller bearing according to an embodiment,
Fig. 2: shows a schematic perspective view of a part of a cage of the spherical roller bearing according to the embodiment,
Fig. 3: shows a schematic circumferential cross section of the cage, and
Fig. 4: shows a schematic cross section of a spherical roller at a maximal diameter of the spherical roller in a cage of the spherical roller bearing of Fig. 1.

Detailed description of the invention

In the following same or similar functioning elements are indicated with the same reference numerals.

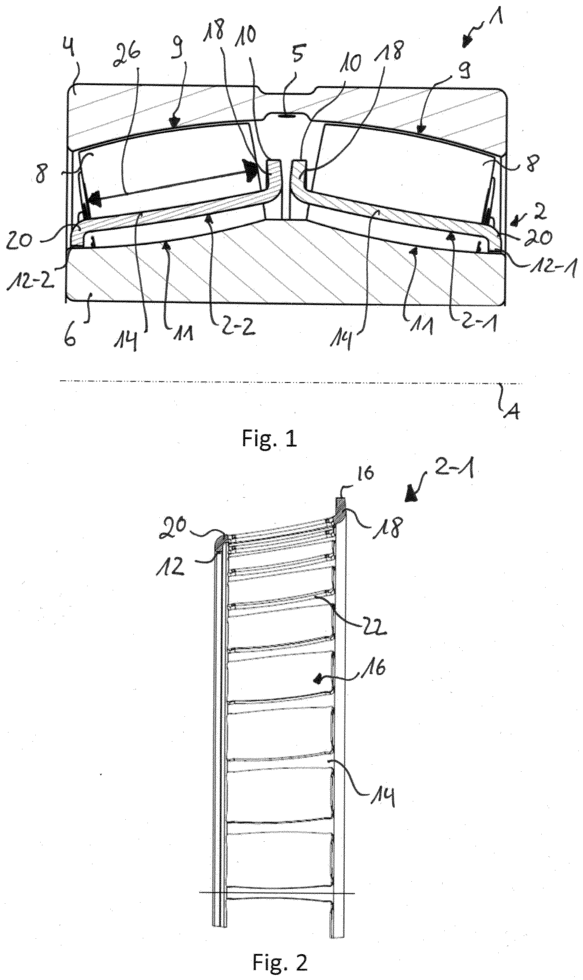

Fig. 1 to 4 show a spherical roller bearing 1 for supporting a wind turbine main shaft as well as a part of a cage 2 of the spherical roller bearing 1.

The spherical roller bearing 1 comprises an outer ring 4, and an inner ring 6, two set of spherical rollers 8 which are rolling along raceways 9 formed on the outer ring 4 and on raceways 11 formed on the inner ring 6. The outer ring 4 comprises an opening 5 through which lubricant can be provided to the spherical roller bearing 1. In particular, the outer ring may be stationary, while the inner ring may rotate around a rotational axis A. Furthermore, the inner ring 6 may be a configured to be mounted on a main shaft of a wind turbine.

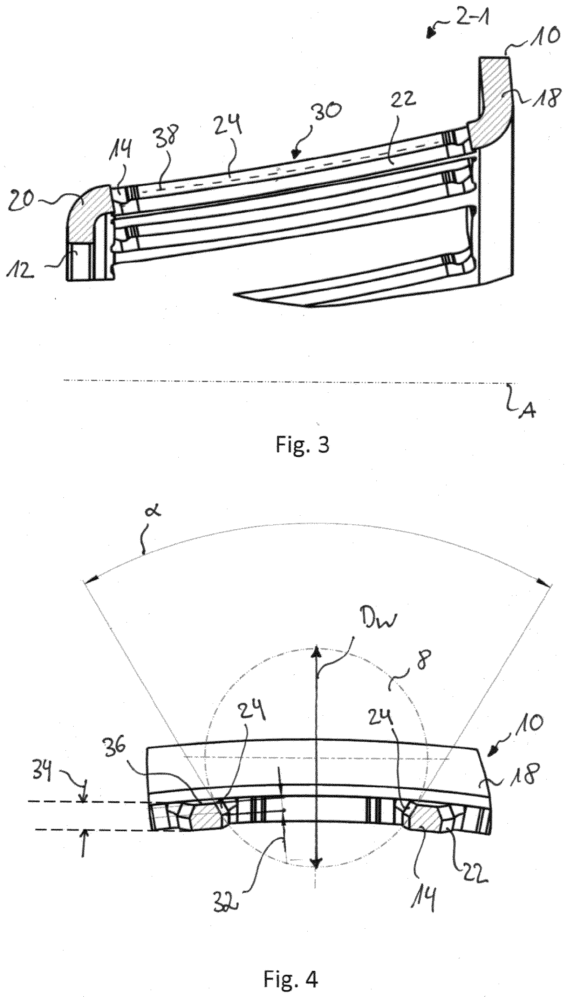

In particular, the spherical roller 8 has a roller length 26 that is equal to or even larger than 1.2 times a maximal roller diameter Dw (Fig. 4).

The spherical roller bearing shown in Fig. 1 is formed without flanges on both the axial inner side and the axial outer side of the inner ring 6. Further, the cages 2-1 and 2-2 are not guided at a guide ring, as the spherical roller bearing 1 is free of any guide rings.

Furthermore, the spherical roller bearing comprises a cage 2 configured to retain both sets of spherical rollers 8. The cage 2 of the spherical roller bearing shown in Fig. 1 comprises a first cage element 2-1 configured to retain the first set of spherical rollers 8, and a second cage element 2-2 which are identical in shape and connected to each other to form the cage 2. Fig. 2 shows the first cage element 2-1 in detail.

Each cage element 2-1, 2-2 comprises an axial inner cage ring 10 extending in a circumferential direction of the bearing, an axial outer cage ring 12 axially spaced from the axial inner cage ring 10 and connected to it with a plurality of cage bars 14 thereby forming closed pockets 16. Each pocket 16 is configured to receive one spherical roller 8.

The cage elements 2-1, 2-2 may be formed separate from each other such that a gap may be formed between the cage elements 2-1, 2-2.

As an alternative, the cage 2 may be formed in one piece such that the cage 2 comprises only one axial inner cage ring 10 instead of two axial inner cage rings 10 that are fixed to each other.

The axial inner cage ring 10 has a flange element 18 radially to the outside, and the axial outer cage ring 12 has a flange element 20 radially extending to the inside.

As can be further seen, the cage is not provided with any means for holding the spherical rollers in the pockets. Thus, none of the parts of the cage, such as the axial inner cage ring 10, the axial outer cage ring 12, the cage bars 14, or the pocket 16 as such, is provided with any means for holding or retaining the spherical rollers such that they cannot be lost. In other words, the at least one cage 2 may comprise neither means for snapping the spherical rollers 8 into the pockets 16 nor dimples formed on the axial end faces of the pockets 16 for engaging with recesses formed on end faces of the spherical rollers 12.

As can be further seen, the cage bars 14 are arranged at a position that is offset to the radial inside of a pitch diameter of the spherical roller bearing 1. Preferably, the position corresponds to 10 to 40 % of the roller diameter Dw (Fig. 4) or 60 to 90 % of the roller diameter Dw, respectively.

Arranging the cage bars 14 offset to the pitch diameter may allow to decrease a minimal distance Dm between the raceways of two neighboring rollers 8 such that it may be possible to increase the number of rollers 8 used in a set of rollers 8. The minimal distance Dm is determined in a condition in which the spherical rollers 8 are equally spaced in the circumferentially direction.

In particular, a ratio Dm/Dw of the minimal distance in the circumferential direction between the raceways of two neighboring spherical rollers 8 of the first and/or second set of spherical rollers to the maximal roller diameter Dw is equal to or below 0.11, preferably 0.09, and even more preferred 0.075, when the spherical rollers 8 of the respective set of spherical rollers 8 are equally spaced in the circumferentially direction.

Alternatively or additionally, the minimal distance Dm in the circumferential direction between the raceways of two neighboring spherical rollers of the first and/or second set of spherical rollers may be equal to or below a value obtained by the following equation:

$$Dm \leq 0.0064\ mm\ \cdot (\ ln\ (P\ \cdot Dw + Dw)\ )^3$$

when the spherical rollers 8 of the respective set of rollers 8 are equally spaced in the circumferentially direction, wherein P is the pitch diameter and Dw is the maximal roller diameter, wherein the millimeter values of P and Dw are to be used as dimensionless variables.

As can be seen from Fig. 3, each cage bar 14 has a concave radial curvature 30 for curving the cage bar in the radial direction. In particular, the spherical rollers 8 may come in contact with the cage bars along a line 38 which is indicated in Fig. 3 by a dashed line. The radial curvature 30 of the cage bars 14 is preferably selected such that the ideal contact line 38 has the same distance to the edges of the cage bars 14.

The radius of the radial curvature 30 is adapted to a crowning radius of the spherical rollers 8. In particular, the radius of the radial curvature may be between 0.7 and 6 times the crowning radius of the spherical rollers, preferably between 1.5 and 4 times the crowning radius of the spherical rollers, and even more preferred between 2 and 3 times the crowning radius of the spherical rollers.

Contacting surfaces 24 which are formed on circumferential side faces 22 of the cage bars 14 and configured for contacting the spherical roller 8 received in one pocket 16 are at least partially inclined such that an opening angle α is formed, as shown in Fig. 4. Preferably, the opening angle α between the contacting surfaces 24 is between 55° and 67°.

If the cage 2 is made from a sheet metal, wherein the pockets 16 are formed by pressing and the contacting surfaces 24 are formed by coining, a coining height 32 may depend on a thickness 34 of the cage bar 14. To reduce the risk of an edge runner, a contact between the spherical roller 8 and the contacting surface 24 may occur at a distance to radial outer side face 36 of the cage bar 14 corresponding to 20 to 45% of the cage bar thickness 34, preferably, 30 to 40% of the cage bar thickness 34 in a position in which the roller 8 is pressed into the pockets 16. The line 38 in Fig. 3 depicts the ideal line of contact between the roller 8 and the contacting surface 24 at the position in which the roller 8 is pressed into the pocket 16 and the roller is moved axially in the cage pocket 16 within its axial cage pocket clearance, wherein each contact point is traced in the line 38.

In summary, by providing the cage bars 14 with a radial curvature 30, the risk that the spherical rollers 8 come in contact with an edge of the cage bar 14 or even scrape against the edge of the cage bar 14 may be reduced. Thus, the radial curvature 30 may allow for a more robust cage bar contact with a reduced edge runner risk at the outer axial edges of the cage bar 14. Since the likelihood of an edge runner may be at least reduced, the contact between the spherical roller 8 and the cage bar 14 may be more stable. This may further allow to reduce a coining height 32 and/or cage bar thickness 34 and/or allow for larger radial and axial cage pocket clearances, which can reduce material and/or manufacturing costs of the cage 2 and therefore the spherical roller bearing 1. Also, due to the more stable contact between the spherical roller 8 and the cage bar 14, the contact stresses may decrease.

**Reference numerals**

| 1 | spherical roller bearing |
|---|---|
| 2 | cage |
| 2-1, 2-2 | cage element |
| 4 | outer ring |
| 5 | opening |
| 6 | inner ring |
| 8 | spherical roller |
| 9 | outer raceway |
| 10 | axial inner cage ring |
| 11 | inner raceway |
| 12-1, 12-2 | axial outer cage ring |
| 14 | cage bar |
| 16 | pocket |
| 18 | flange element |
| 20 | flange element |
| 22 | circumferential surface |
| 24 | contacting surface |
| 26 | roller length |
| 30 | radial curvature |
| 32 | coining height |
| 34 | cage bar thickness |
| 36 | outer radial side face |
| 38 | contact line |
| $\alpha$ | opening angle |
| Dw | roller diameter |
| A | rotational axis |

**Claims**

1. Spherical roller bearing (1), in particular for supporting a wind turbine main shaft, comprising:

at least an outer ring (4), and an inner ring (6), wherein the inner ring (6) has a diameter of at least 499mm,
two set of spherical rollers (8) which are rolling along raceways formed on the outer and inner ring (4, 6), and
at least one cage (2) configured to retain the spherical rollers (8), wherein the at least one cage (2) comprises at least one axial inner cage ring (10) extending in a circumferential direction of the spherical roller bearing (1), a first axial outer cage ring (12-1) spaced from the at least one axial inner cage ring (10) on a first axial side and connected to it with a plurality of cage bars (14) thereby forming closed pockets (16), wherein each pocket (16) is configured to receive one spherical roller (8) of the first set of spherical rollers, and a second axial outer cage ring (12-2) spaced from the at least one axial inner cage ring (10) on a second axial side opposite of the first axial side and connected to it with a plurality of cage bars (14) thereby forming closed pockets (16), wherein each pocket (16) is configured to receive one spherical roller (8) of the second set of spherical rollers (8), **characterized in that** each cage bar (14) has a radial curvature (30) for curving the cage bar (14) in the radial direction along the axial direction, wherein the radial curvature (30) is concave with respect to a pitch diameter, and **in that** the at least one cage and/or the spherical rollers is/are free of any means for holding the spherical rollers in the at least one cage.

2. Spherical roller bearing (1) according to claims 1, wherein a radius of the radial curvature (30) is adapted to a crowning radius of the spherical rollers (8).

3. Spherical roller bearing (1) according to claim 2, wherein the radius of the radial curvature (30) is between 0.7 and 6 times the crowing radius of the spherical rollers (30), preferably between 1.5 and 4 times the crowning radius of the spherical rollers (30), and even more preferred between 2 and 3 times the crowning radius of the spherical rollers (30).

4. Spherical roller bearing (1) according to any one of the previous claims, wherein the inner ring (6) is not provided with a flange configured to retain and/or guide the spherical rollers, and/or wherein the spherical roller bearing (1) is not equipped with a guide ring.

5. Spherical roller bearing (1) according to any one of the previous claims, wherein at least one pocket (16) is defined by a first cage bar on a first circumferential side and a second cage bar on a second circumferential side opposite to the first circumferential side, wherein each of the first cage bar and the second cage bar has a contact surface for contacting a spherical roller (8), wherein the contact surfaces (24) of the first and second cage bar are at least partially inclined such that an opening angle ($\alpha$) is formed, wherein the opening angle ($\alpha$) is preferably between 55° and 67°.

6. Spherical roller bearing (1) according to any one of the previous claims, wherein the at least one cage (2) is manufactured from a sheet metal.

7. Spherical roller bearing (1) according to any one of the previous claims, wherein the cage bars (14) are at least partially arranged at a position in a radial direction that is offset to a pitch diameter.

8. Spherical roller bearing (1) according to claim 7, wherein the cage bars (14) are arranged on a radially inner side of the pitch diameter.

9. Spherical roller bearing (1) according to any one of the previous claims, wherein the axial inner cage ring (10) consists of two separate ring elements.

10. Spherical roller bearing (1) according to claim 9, wherein a gap is formed between the first and second ring elements of the axial inner cage ring (10).

11. Spherical roller bearing (1) according to any one of the claims 1 to 8, wherein the axial inner cage ring (10) comprises a first ring element and a second ring element which are fixed to each other.

12. Bearing arrangement for a wind turbine main shaft, wherein the bearing arrangement includes at least one spherical roller bearing (1) according to any one of the previous claims.

Fig. 1

Fig. 2

Fig. 3

Fig. 4

Europäisches
Patentamt

European
Patent Office

Office européen
des brevets

# EUROPEAN SEARCH REPORT

**Application Number**

EP 25 19 0230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 104 314 985 A (SHANDONG CAMERY KMR BEARING SCIENCE & TECHNOLOGY CO LTD) 28 January 2015 (2015-01-28) * claims 1-3; figures 1,5 * ----- | 1-12 | INV. F16C19/38 F16C23/08 F16C33/46 F16C33/54 |
| Y | JP 2010 112534 A (NTN TOYO BEARING CO LTD) 20 May 2010 (2010-05-20) * paragraph [0072] - paragraph [0073]; figures 1,2,15 * ----- | 1-12 | |

**TECHNICAL FIELDS SEARCHED (IPC)**

F16C

The present search report has been drawn up for all claims

| Place of search | Date of completion of the search | Examiner |
|---|---|---|
| The Hague | 18 November 2025 | Cerva-Pédrin, Sonia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 0230

This annex lists the patent family members relating to the patent documents cited in  the above-mentioned European search report.
The members are as contained in the European Patent Office EDP file on
The European Patent Office is in no way liable for these particulars which are merely given for the purpose of information.

18-11-2025

| Patent document cited in search report | Publication date | Patent family member(s) | Publication date |
|---|---|---|---|
| CN 104314985 A | 28-01-2015 | NONE | |
| JP 2010112534 A | 20-05-2010 | NONE | |

EPO FORM P0459

For more details about this annex : see Official Journal of the European Patent Office, No. 12/82